Europäisches Patentamt

European Patent Office

Office européen des brevets

(19)

(11) Publication number: **0 390 721**
**A1**

## (12) EUROPEAN PATENT APPLICATION

(21) Application number: **90630050.4**

(22) Date of filing: **22.02.90**

(51) Int. Cl.⁵: **G01P 15/13**

The title of the invention has been amended (Guidelines for Examination in the EPO, A-III, 7.3).

(30) Priority: **28.02.89 US 317237**

(43) Date of publication of application:
**03.10.90 Bulletin 90/40**

(84) Designated Contracting States:
**DE FR GB IT NL SE**

(71) Applicant: **UNITED TECHNOLOGIES CORPORATION**
**United Technologies Building 1, Financial Plaza**
**Hartford, CT 06101(US)**

(72) Inventor: **McClure, Winthrop H., III**
**14802 North 9th Street**
**Phoenix, Arizona 85022(US)**

(74) Representative: **Waxweiler, Jean et al**
**OFFICE DENNEMEYER S.à.r.l. P.O. Box 1502**
**L-1015 Luxembourg(LU)**

(54) **Electrostatic force nulling accelerometer arrangement.**

(57) An accelerometer arrangement includes an acceleration sensor that includes two capacitor plates having respective parallel mutually facing major surfaces which bound a sensing gap therebetween. A plate-shaped electrically chargeable proof mass is resiliently mounted in the gap in parallelism with the major surfaces for displacement in response to the action of acceleration forces thereon out of a substantially central rest position toward one or the other of the major surfaces depending on the direction of the acceleration forces. An electrical potential difference is established between the capacitor plates to generate respective electrostatic fields between the capacitor plates and the proof mass which cause a proof mass electrical potential variation having a magnitude and sense depending on the extent and direction of the displacement of the proof mass out of its rest position. The variation is evaluated and an electrical control signal having a voltage that is proportionate to the variation and sufficient for electrostatic forces caused thereby between the proof mass and the capacitor plates to return the proof mass to the rest position thereof against the action of the acceleration forces thereon is generated and supplied to the proof mass.

**EP 0 390 721 A1**

FIG. 2

## Electrostatic Force Nulling Accelerometer Arrangement and Method

### Technical Field

The present invention relates to accelerometers in general, and more particularly to capacitative accelerometers.

### Background Art

There are already known various constructions of accelerometers, among them such utilizing a very thin doped silica plate resiliently suspended between two capacitor plates as a proof mass that is displaced by acceleration forces out of its rest or null position, with attendant changes in the capacitances and electrostatic fields existing between the proof mass and the capacitor plates that are charged to different electrical potentials. It is also already known to determine the extent and direction of the displacement of the proof mass out of its rest position from the electric current which flows into or out of the proof mass as a result of electric potential variations occurring in the proof mass when it is displaced out of its rest position due to the aforementioned changes. However, experience with accelerometers of this type has shown that they provide very unreliable measurement results, particularly since the value of the aforementioned electric current is a complex and, by and large, unpredictable function not only because the potential change in the proof mass in a non-linear function of the displacement and is also dependent on the potential difference between the capacitor plates which it may be very difficult or impossible to maintain constant at all times or over an extended period of time, but also because the displacement itself is a non-linear function of the acceleration forces acting on the proof mass owing to, among others, non-linear response of the resilient means, such as flexible hinges, which mount the proof mass in its position between the capacitor plates, the effects of aging on the mechanical properties of the hinges, temperature related changes in mechanical properties and dimensions, and the like.

Accordingly, it is a general object of the present invention to avoid the disadvantages of the prior art.

More particularly, it is an object of the present invention to provide an accelerometer arrangement which does not possess the disadvantages of the known arrangements of this kind.

Still another object of the present invention is so to develop the accelerometer arrangement of the type here under consideration as to provide reliable measurement results which are a linear function of the applied acceleration forces at least over a wide range of such forces.

It is yet another object of the present invention to devise an electrical driving circuit for use in an accelerometer arrangement of the above type, which circuit renders it possible to obtain a reliable and linearly dependent indication of the acceleration forces acting on the proof mass.

A concomitant object of the present invention is to design the driving circuit and accelerometer arrangement of the above type in such a manner as to be relatively simple in construction, inexpensive to manufacture, easy to use, and yet reliable in operation.

It is still a further object of the present invention to present a method of driving the accelerometer arrangement of the above type.

### Disclosure of the Invention

In keeping with these objects and others which will become apparent hereafter, one feature of the present invention resides in an accelerometer arrangement which comprising as one of its components at least one acceleration sensor. This sensor includes two capacitor plates having respective parallel mutually facing major surfaces which bound a sensing gap therebetween, a plate-shaped electrically chargeable proof mass, and means for resiliently mounting the proof mass in the gap in parallelism with the major surfaces for displacement in response to the action of acceleration forces thereon out of a substantially central rest position toward one or the other of the major surfaces depending on the direction of the acceleration forces. There is further provided means for establishing an electrical potential difference between the capacitor plates to generate respective electrostatic fields between the capacitor plates and the proof mass which cause a proof mass electrical potential variation having a magnitude and sense depending on the extent and direction of the displacement of the proof mass out of the rest position thereof. The arrangement of the present invention further includes means for evaluating the variation and for generating and supplying to the proof mass an electrical control signal having a voltage that is proportionate to the variation and sufficient for electrostatic forces caused thereby between the proof mass and the capacitor plates to return the proof mass to the rest position thereof against the action of the acceleration forces thereon. The present invention further relates to an electrical driving arrangement for an acceleration sensor of the above type, as well as to a method of driving such acceleration sensor.

Brief Description of the Drawing

The present invention will be described in more detail below with reference to the accompanying drawing in which:

Figure 1 is a simplified cross-sectional view of an example of an acceleration sensor that can be used in an accelerometer arrangement of the present invention; and

Figure 2 is a diagrammatic view of the accelerometer arrangement of the present invention showing an electric driving circuit for an only schematically depicted acceleration sensor akin to that of Figure 1.

Best Mode for Carrying Out the Invention

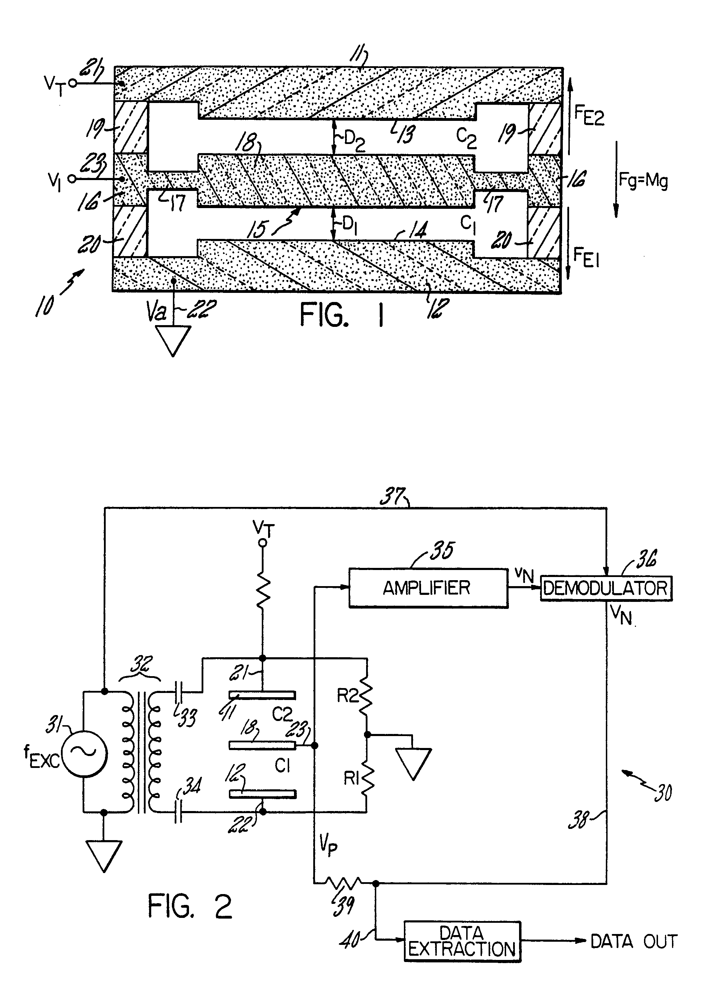

Referring now to the drawing in detail, and first to Figure 1 thereof, it may be seen that the reference numeral 10 has been used therein to identify an acceleration sensor in its entirety. The acceleration sensor 10 includes two capacitor components 11 and 12 having respective major surfaces 13 and 14 which are parallel to one another, face each other and are spaced from one another by a predetermined distance to define a capacitor gap therebetween. While the capacitor components 11 and 12 are shown to have substantially plate-shaped configurations and hence are being referred to herein as capacitor plates, it is to be understood that they could have any other configurations so long as they are provided with the parallel and spaced major surfaces 13 and 14 that bound the capacitor gap. The major surfaces 13 and 14 are advantageously coextensive with one another.

A proof component generally identified by the reference numeral 15 is arranged between the capacitor plates 11 and 12 and includes a circumferentially complete connecting portion or separate connecting portions 16, usually but not necessarily separate flexible hinge portions 17, and a central proof mass 18 which is resiliently connected to the connecting portion or portions 16 by the hinge portions 17. The capacitor plates 11 and 12 and the proof component 15 are advantageously made of silica which is at least partially doped to impart electrically conductive properties to such doped portions. The proof component 15 is connected to and preferably electrically insulated from the two capacitor plates 11 and 12 by respective connecting and spacing bodies 19 and 20 which are interposed between the connecting portion or portions 16 of the proof component 15 and the corresponding regions of the capacitor plates 11 and 12.

The proof mass 18 is held by the hinge portions 17 in the illustrated rest position in which it is parallel to and substantially equidistantly spaced from the major surfaces 13 and 14 of the capacitor plates 11 and 12 so long as no external acceleration forces act on the acceleration sensor 10. However, if the acceleration sensor is subjected to acceleration having at least a component directed normal to the major surfaces 13 and 14 of the capacitor plates 11 and 12, the flexible mounting provided by the hinge portions 17 will permit the proof mass to become displaced by the acceleration or inertial forces acting thereon out of its rest position toward one or the other of the major surfaces 13 and 14, depending on the direction of the applied acceleration. The flexible portions 17 are preferably constructed and distributed about the periphery of the proof mass 18 in such a manner that the proof mass 18 remains in substantial parallelism with the major surfaces 13 and 14 of the capacitor plates 11 and 12 during this displacement. Details of one possible construction of the acceleration sensor 10 that accomplishes the above tasks in a superb manner are disclosed in a commonly owned simultaneously filed U. S. patent application Serial No.     (Docket No. R-3138), the contents of which is incorporated herein by reference to the extent needed for better understanding of the present invention.

The capacitor plates 11 and 12 and the proof component 15 are shown to be provided with respective terminals 21, 22 and 23. When, as shown, the terminal 22 is grounded and a voltage $V^T$ is applied to the terminal 21, resulting in the formation of an electric field between the major surfaces 13 and 14, the proof mass 18 will tend to be at a voltage $V_P$ which is dependent on the distances $D_1$ and $D_2$ from the major surfaces 13 and 14, respectively and which will also appear in a steady state condition at the terminal 23, where it could be read to determine the position of the proof mass 18 relative to the capacitor plates 11 and 12. However, as mentioned before, the value of this proof plate voltage $V_p$ is such a complex function of so many variables that the only thing that could be determined with certainty from the value of the voltage $V_p$ after the proof mass 18 has been displaced by acceleration forces out of its rest position would be the direction of the component of such acceleration that acts in the direction of the primary axis extending normal to the surfaces 13 and 14, while any conclusions arrived at from the value of the voltage $V_p$ as to the magnitude of such acceleration component would be approximations at best.

To avoid this uncertainty, it is proposed by the present invention to force the proof mass voltage $V_p$ to a level at which the electrostatic forces existing between the proof mass 18 and the capacitor plates 11 and 12 return the proof mass 18 against the action of acceleration forces thereon to its rest or null position. This technique is based on the recognition of the fact that the influence of manufacturing tolerances, temperature and/or material aging on the flexibility of the hinge portions 17, which is a very relevant factor in the determination of the extent of displacement of the proof mass 18 by acceleration forces acting thereon out of its rest position, becomes irrelevant when the proof mass 18 is in its rest position, because then the extent of displacement of the proof mass 18 out of its rest position is zero. Consequently, it is merely necessary to give the proof mass voltage $V_p$ such a value that the net electrostatic force acting on the proof mass 18 in the rest position thereof (i.e. the vectorial sum of the electrostatic forces acting between the proof mass 18 and the capacitor plates 11 and 12) is equal and opposite when the proof mass 18 is in its rest position to the sum total of the acceleration forces acting on the proof mass 18 in the direction of the primary axis of the acceleration sensor 10.

More particularly, the electrostatic force $F_E$ between the proof mass 18 and one of the capacitor plates 11 and 12 is given by:

$$F_E = \frac{\varepsilon_o A V^2}{2D^2}$$

wherein
A = effective capacitor plate area,
$\varepsilon_o$ = dielectric constant,
V = voltage difference between the proof mass and the one capacitor plate, and
D = distance between the proof mass and the one capacitor plate.

When the proof mass 18 is in its rest position, that is, substantially centrally between the major surfaces 13 and 14, the net electrostatic force $F_E$ is equal to the acceleration force $F_g$ (which is equal to the product of mass m and acceleration g), and the net electrostatic force $F_E$ is equal to the vectorial sum of, that is, the difference between, the partial electrostatic forces $F_{E1}$ and $F_{E2}$ which exist between the proof mass 18 and the capacitor plates 11 and 12, respectively, and which are proportionate in accordance with the above equation to voltage differences $V_1$ and $V_2$ which are encountered between the proof mass 18 and the major surfaces 13 and 14. Moreover, $V_2 = V^T - V_1$. If $A_1 = A_2$ (as it is in the illustrated construction of the acceleration sensor 10) and $D_1 = D_2$ (as it is in the rest position of the proof mass 18), then

$$mg = \frac{\varepsilon_o A V_1^2}{2D^2} - \frac{\varepsilon_o A (V^T - V_1)^2}{2D^2}$$

$$= \frac{\varepsilon_o A}{2D^2} (V_1^2 - (V^T - V_1)^2)$$

$$= \frac{\varepsilon_o A}{2D^2} (V_1^2 - (V^T)^2 + 2V^T V_1 - V_1^2)$$

$$g = \frac{\varepsilon_o A}{2mD^2} (2V^T V_1 - (V^T)^2)$$

It may be seen from the above equation that the acceleration g is linearly related to the forcing voltage $V_p$ applied to the proof mass 18 so that the value of g can be easily determined from the value of $V_p$.

Figure 2 of the drawing, in which the same reference numerals as before have been used to identify corresponding parts, shows an example of the implementation a driving circuit 30 which utilizes the above-discussed concept. The circuit 30 includes an oscillator 31 which generates an alternating current at a predetermined frequency. The output of the oscillator 31 is coupled, by means of a transformer 32 and through respective separating capacitors 33 and 34, to the terminals 21 and 22 of the capacitor plates 11 and 12. The terminals 21 and 22 are further connected to the ground through respective resistors $R_1$ and $R_2$, and the voltage $V^T$ is supplied to the terminal 21 and thus to the capacitor plate 11.

The terminal 23 which is electrically connected with the proof mass 18 is connected to an amplifier 35. The amplifier 35 may be constructed, for example, as a transimpedance amplifier, in which case it converts variations in electric current flowing in and out of the proof mass 18 (predominantly if not exclusively as a result of the action of the alternating currents applied to the capacitor plates 11 and 12 on the proof mass 18) into corresponding variations in an output voltage $v_N$. This output voltage $v_N$ is then supplied to a demodulator 36 where it is demodulated with the alternating current which is issued by the oscillator 31 and which is supplied to the demodulator 36 through an electrical connecting line 37. The amplifier 35 and the demodulator 36 are of conventional constructions and they can be adjusted, in a manner well known to those familiar with this field, in such a manner that the demodulated D. C. voltage $V_N$ of the output signal issued by the demodulator 36 is at the level needed to force the proof mass 18 against the action of the acceleration forces acting thereon into its rest position. This output signal is then applied through a connecting line 38 and a resistor 39 as the requisite control or forcing signal having the required voltage value $V_p$ to the terminal 23 of the proof mass 18. Moreover, a branch line 40 connected to the line 40 supplies the aforementioned output signal of the demodulator 36 as a measuring signal to a data extraction device 41 of any known construction which issues a stream of data indicative of the value of the D. C. output voltage $V_N$ (and thus of the value of the acceleration g) in any desired form.

While the present invention has been illustrated and described as embodied in a particular construction of an accelerometer using a particular construction of acceleration sensor, it will be appreciated that the present invention is not limited to this particular example; rather, the scope of protection of the present invention is to be determined solely from the attached claims.

## Claims

1. An accelerometer arrangement comprising at least one acceleration sensor including two capacitor plates having respective parallel mutually facing major surfaces which bound a sensing gap therebetween, a plate-shaped electrically chargeable proof mass, and means for resiliently mounting said proof mass in said gap in parallelism with said major surfaces for displacement in response to the action of acceleration forces thereon out of a substantially central rest position toward one or the other of said major surfaces depending on the direction of said acceleration forces;
means for establishing an electrical potential difference between said capacitor plates to generate respective electrostatic fields between said capacitor plates and said proof mass which cause a proof mass electrical potential variation having a magnitude and sense depending on the extent and direction of said displacement of said proof mass out of said rest position thereof; and
means for evaluating said variation and for generating and supplying to said proof mass an electrical control signal having a voltage that is proportionate to said variation and sufficient for electrostatic forces caused thereby between said proof mass and said capacitor plates to return said proof mass to said rest position thereof against said action of said acceleration forces thereon.

2. The accelerometer arrangement as defined in claim 1, wherein said establishing means includes means for applying to said capacitor plates respective D. C. voltages which are at substantially constant different levels, as well as respective A. C. voltages at the same predetermined frequency but with opposite phases; and wherein said evaluating means includes means for converting alternating electric current flow into and/or out of said proof mass in response to said variation into said control signal.

3. The accelerometer arlrangement as defined in claim 2, wherein said converting means includes an amplifier receiving said alternating electric current flow and issuing an alternating voltage, and means for demodulating said alternating voltage with one of said A. C. voltages to obtain said control signal.

4. An arrangement for driving at least one acceleration sensor which includes two capacitor plates having respective parallel mutually facing major surfaces which bound a sensing gap with one another and a plate-shaped electrically chargeable proof mass that is resiliently mounted in the gap in parallelism with the major surfaces for displacement in response to the action of acceleration forces thereon out of a substantially central rest position toward one or the other of the major surfaces depending on the direction of the acceleration forces, comprising

means for establishing an electrical potential difference between the capacitor plates to generate respective electrostatic fields between the capacitor plates and the proof mass which cause a proof mass electrical potential variation having a magnitude and sense depending on the extent and direction of the displacement of the proof mass out of its rest position; and

means for evaluating said variation and for generating and supplying to the proof mass an electrical control signal having a voltage that is proportionate to said variation and sufficient for electrostatic forces caused thereby between the proof mass and the capacitor plates to return the proof mass to the rest position thereof against the action of the acceleration forces thereon.

5. The driving arrangement as defined in claim 4, wherein said establishing means includes means for applying to the capacitor plates respective D. C. voltages which are at substantially constant different levels, as well as respective A. C. voltages at the same predetermined frequency but with opposite phases; and wherein said evaluating means includes means for converting alternating electric current flow into and/or out of the proof mass in response to said variation into said control signal.

6. The driving arrangement as defined in claim 2, wherein said converting means includes an amplifier receiving said alternating electric current flow and issuing an alternating voltage, and means for demodulating said alternating voltage with one of said A. C. voltages to obtain said control signal.

7. A method of driving at least one acceleration sensor which includes two capacitor plates having respective parallel mutually facing major surfaces which bound a sensing gap with one another and a plate-shaped electrically chargeable proof mass that is resiliently mounted in the gap in parallelism with the major surfaces for displacement in response to the action of acceleration forces thereon out of a substantially central rest position toward one or the other of the major surfaces depending on the direction of the acceleration forces, comprising the steps of

establishing an electrical potential difference between the capacitor plates to generate respective electrostatic fields between the capacitor plates and the proof mass which cause a proof mass electrical potential variation having a magnitude and sense depending on the extent and direction of the displacement of the proof mass out of its rest position; and

evaluating said variation and generating and supplying to the proof mass an electrical control signal having a voltage that is proportionate to said variation and sufficient for electrostatic forces caused thereby between the proof mass and the capacitor plates to return the proof mass to the rest position thereof against the action of the acceleration forces thereon.

8. The method as defined in claim 7, wherein said establishing step includes applying to the capacitor plates respective D. C. voltages which are at substantially constant different levels, as well as respective A. C. voltages at the same predetermined frequency but with opposite phases; and wherein said evaluating step includes converting alternating electric current flow into and/or out of the proof mass in response to said variation into the control signal.

9. The method as defined in claim 8, wherein said converting step includes converting the alternating electric current flow into an alternating voltage, and demodulating the alternating voltage with one of the A. C. voltages to obtain the control signal.

FIG. I

FIG. 2

European Patent Office

**EUROPEAN SEARCH REPORT**

Application Number

EP 90 63 0050

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 178 856 (LITTON SYSTEMS) * Page 2, lines 24-73; page 3, lines 15-45; figures 2-4,6 * | 1,2,4,5 ,7,8 | G 01 P 15/13 |
| Y | | 3,6,9 | |
| Y | GB-A-2 096 326 (SECRETARY OF STATE FOR DEFENCE) * Page 1, lines 98-115; page 2, lines 8-64; figures 1,5,7-10 * | 3,6,9 | |
| A | US-A-4 584 885 (CADWELL) * Column 2, line 63 - column 4, line 35; figures 1-10 * | 1-9 | |

TECHNICAL FIELDS SEARCHED (Int. Cl.5)

G 01 P

The present search report has been drawn up for all claims

| Place of search | Date of completion of the search | Examiner |
|---|---|---|
| THE HAGUE | 16-05-1990 | ROBINSON M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P0401)